Europäisches Patentamt

European Patent Office

Office européen des brevets

(19)

(11) Numéro de publication : **0 133 132**
**B1**

(12)
# FASCICULE DE BREVET EUROPÉEN

(45) Date de publication du fascicule du brevet :
**15.04.87**

(21) Numéro de dépôt : **84401569.3**

(22) Date de dépôt : **26.07.84**

(51) Int. Cl.⁴ : **C 12 C  7/08**

(54) **Procédé et installation de préparation d'un moût sucré.**

(30) Priorité : **28.07.83 FR 8312475**

(43) Date de publication de la demande :
**13.02.85 Bulletin 85/07**

(45) Mention de la délivrance du brevet :
**15.04.87 Bulletin 87/16**

(84) Etats contractants désignés :
**AT BE CH DE FR GB IT LI LU NL SE**

(56) Documents cités :
**EP-A- 0 041 641**
**DD-A- 121 798**
**DE-B- 1 300 489**
**FR-A- 1 313 377**
**FR-A- 1 539 413**

(73) Titulaire : **CLEXTRAL**
**15 rue Pasquier**
**F-75008 Paris (FR)**

(72) Inventeur : **Billon, Michel**
**41 rue Emile Zola**
**F-42240 Unieux (FR)**

(74) Mandataire : **Moncheny, Michel et al**
**c/o Cabinet Lavoix 2 Place d'Estienne d'Orves**
**F-75441 Paris Cedex 09 (FR)**

EP 0 133 132 B1

Jouve, 18, rue St-Denis, 75001 Paris, France

## Description

L'invention a pour objet un procédé et une installation de préparation d'un moût sucré à partir de céréale, notamment pour la préparation d'une bière ou d'une boisson analogue.

On sait que, pour fabriquer de la bière, on utilise du malt, c'est-à-dire de l'orge germée, à partir duquel on prépare un moût sucré dans un traitement dit de brassage, ce moût est ensuite soumis à une opération de fermentation en présence de levure pour l'obtention d'une boisson alcoolisée. Le malt est d'abord concassé dans un moulin et la farine obtenue mélangée avec de l'eau dans un dispositif appelé « hydrateur », pour l'opération d'empâtage.

Dans le procédé dit « par infusion », le mélange empâté est envoyé ensuite dans un dispositif de saccharification constitué normalement d'une cuve dite cuve-matière dans laquelle la température est élevée par paliers pour produire la saccharification de l'amidon, c'est-à-dire sa transformation en dextrine et en maltose sous l'influence des enzymes du malt.

Dans le procédé dit, « par décoction », une partie du mélange est chauffée à part dans une cuve dite « chaudière à trempe » puis ramenée dans la cuve matière dont la température augmente. La même opération est répétée deux ou trois fois pour porter le mélange dans la cuve matière à une température de 70 à 75 °C, le processus de saccharification se produisant ainsi progressivement.

Le moût sucré ainsi obtenu subit ensuite des opérations successives de filtration, de cuisson et de houblonnage avant fermentation, qui n'ont pas lieu d'être décrites en détails.

Dans certains pays, la bière doit être fabriquée uniquement à partir de malt d'orge. Cependant, il est possible de remplacer une partie du malt par un produit de substitution dont la saccharification est assurée, après empâtage, par les enzymes du Malt. Ce produit de substitution, souvent appelé « grain cru », peut être constitué par une céréale telle que des brisures de riz ou du gritz de maïs, par exemple.

Dans ce cas, parallèlement à la ligne de préparation du malt, on dispose d'une ligne de préparation du grain cru qui, à la sortie des silos, comprend un concasseur, un préempâteur qui peut être constitué par l'hydrateur utilisé pour l'empâtage du malt et une « chaudière à trempe ». En effet, avant d'être soumis à l'action du malt dans l'opération de saccharification, le grain cru doit être cuit à part pour réaliser l'empesage de l'amidon qu'il contient. C'est pourquoi, on utilise le procédé de brassage par décoction décrit plus haut pour le malt.

Le grain cru, préalablement empâté dans l'hydrateur, est mélangé dans la chaudière à trempe avec de l'eau tiède et avec une partie du contenu de la cuve-matière qui apporte des enzymes hydrolysantes. La trempe de grains crus ainsi préparée subit ensuite une ébullition qui réalise l'éclatement des particules d'amidon puis est ramenée dans la cuve-matière dont la température augmente à chaque addition d'une trempe et où se réalise la saccharification au contact du reste du malt.

La législation locale peut limiter la proportion de grain cru utilisée pour la fabrication de la bière. Ainsi, en France, cette proportion est limitée à 30 %. Toutefois, même dans les pays où la législation n'impose pas un pourcentage maximal de grain cru, on ne peut généralement pas dépasser une proportion de 45 % pour la fabrication d'une bière correcte à base de malt car, au-delà, la saccharification de l'amidon ne se fait pas dans de bonnes conditions.

D'autre part, lorsque l'on utilise du riz, on a constaté que certaines qualités de riz produites actuellement s'empèsent mal, ce qui augmente la teneur en malt que l'on doit utiliser.

On connaît dans le DE-B-1.300.489 un procédé de traitement qui prévoit une étape de saccharification après décoction du malt dans un milieu hydrolysant.

On connaît également dans le FR-A-1.539.413 et EP-A-41.641 des procédés qui visent à produire un produit à faible hygrométrie, obtenu par cuisson-extrusion-évaporation à partir de céréale.

L'invention a pour objet un nouveau procédé plus économique de préparation de moûts sucrés permettant notamment d'augmenter la proportion de grain cru et donc de diminuer la proportion de malt à utiliser pour la préparation d'une boisson alcoolisée de bonne qualité.

En outre, l'invention présente aussi des avantages dans les cas où l'on utilise comme produit hydrolysant des enzymes industrielles à la place du malt, pour la préparation d'un moût sucré susceptible de servir à la fabrication de boissons alcoolisées.

D'autres avantages de l'invention apparaîtront au cours de la description qui va suivre.

Conformément à l'invention, la céréale est soumise, avant empâtage, à un traitement de cuisson-extrusion effectué à une température supérieure à 100 °C, par passage en continu de la céréale, avec une quantité d'eau pouvant être réduite à celle nécessaire à l'éclatement des grains d'amidon, dans une machine d'extrusion à vis munie de moyens de chauffage de la matière, la céréale extrudée étant ensuite empâtée et soumise à un traitement de saccharification effectuée par chauffage progressif en présence du produit hydrolysant, correspondant à une quantité d'enzymes naturelles ou industrielles équivalente à celle contenue dans 40 % de malt, jusqu'à l'obtention du moût sucré.

L'invention couvre également une installation perfectionnée de préparation de moût sucré comprenant des moyens de concassage du malt et éventuellement de la céréale, au moins un dispositif d'empâtage de la farine de malt et de la céréale, et un dispositif de saccharification du mélange de malt et céréale cuite.

Conformément à l'invention, l'installation comprend un dispositif de cuisson-extrusion de la céréale, placé en amont du dispositif d'empâtage et constitué d'une machine d'extrusion à vis munie de moyens de chauffage, dans laquelle la céréale subit une cuisson-extrusion sous pression à une température supérieure à 100 °C, la céréale étant ensuite empâtée et mélangée en proportion voulue avec le produit hydrolysant dans le dispositif de saccharification.

Selon une caractéristique avantageuse, le dispositif d'empâtage est alimenté simultanément en produit hydrolysant et en céréale extrudée pour la réalisation directe d'une pâte mélangée susceptible de subir ensuite le traitement de saccharification.

Dans un mode de réalisation préférentiel, la machine d'extrusion comprend au moins deux vis munies de filetages à pas variés déterminant, dans le sens d'avancement de la matière, une zone de transport et de compression progressive de la céréale et une zone de freinage avec compression et malaxage intense dans laquelle se réalise l'éclatement des grains d'amidon, le fourreau étant muni de moyens de chauffage sur la zone de freinage et sur au moins la partie aval de la zone de transport.

L'invention sera mieux comprise par la description détaillée d'un mode de réalisation particulier, donnée à titre d'exemple et représenté sur les dessins annexés.

La figure 1 est un schéma d'ensemble d'une installation pour la mise en œuvre du procédé selon l'invention.

La figure 2 représente en coupe axiale une machine d'extrusion.

La figure 3 est une vue en coupe transversale de la machine d'extrusion.

La figure 4 est une vue en coupe axiale d'une variante de la machine d'extrusion.

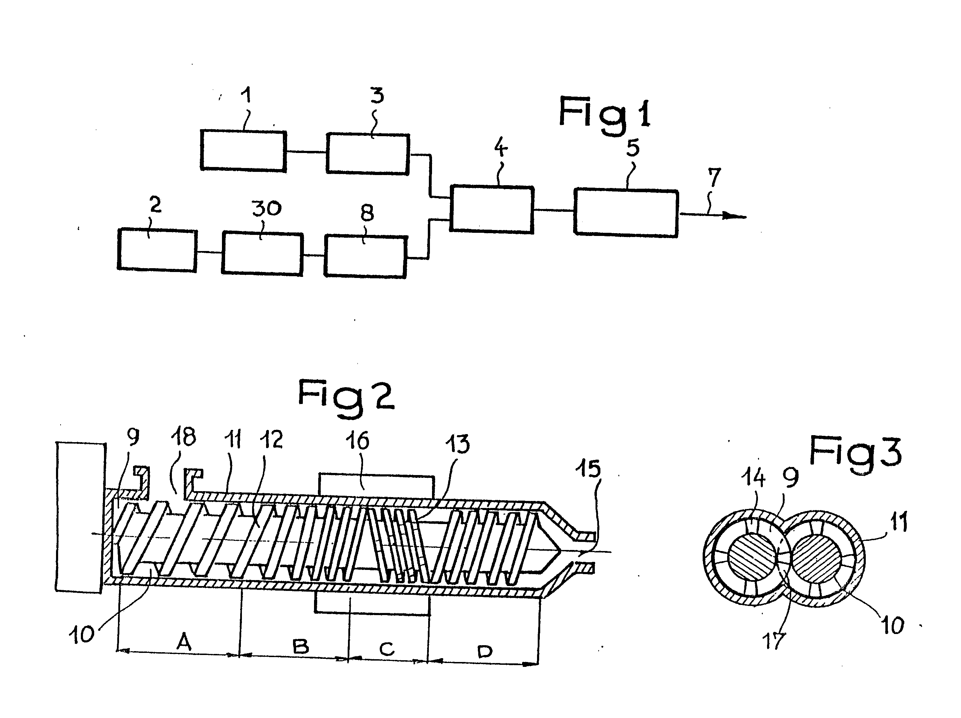

Sur la figure 1, on a représenté schématiquement l'ensemble d'une installation de préparation de moût sucré à partir de malt et de céréale de substitution stockés respectivement dans des silos 1 et 2.

L'installation comprend deux lignes de préparation, respectivement du malt et d'une céréale de substitution, dite « grain cru ».

Le malt venant du silo 1 passe d'abord dans un concasseur 3 puis dans un dispositif d'empâtage, ou « hydrateur » 4 dans lequel, par mélange de la farine de malt avec une quantité déterminée d'eau, on prépare une pâte que l'on envoie dans une cuve-matière 5.

Le grain cru, par exemple de la brisure de riz, passe également, à la sortie du silo 2, dans un concasseur 30.

Selon une caractéristique essentielle de l'invention, le concasseur 30 peut alimenter directement une machine d'extrusion 8 dans laquelle on réalise en continu la cuisson-extrusion de la farine de céréale.

La machine d'extrusion 8 représentée plus en détail sur les figures 2 et 3 comprend de préférence deux vis 9 et 10 entraînées en rotation à l'intérieur d'un fourreau 11 qui les enveloppe. Les deux vis 9 et 10 sont munies de filetages identiques imbriqués et sont entraînées en rotation dans le même sens.

Comme on l'a représenté sur la figure 2, les filetages ont des pas variés qui déterminent de l'avant à l'aval dans le sens d'avancement de la matière plusieurs zones successives.

On distingue ainsi une zone A à pas large susceptible d'entraîner vers l'aval (vers la droite sur la figure) la matière introduite par un orifice 18 placé à l'extrémité amont du fourreau 11.

Le pas des filets 12 se resserre ensuite peu à peu dans une zone B de compression progressive qui précède une zone de freinage C dans laquelle, de préférence, les filets 13 ont un pas inversé et sont munis d'ouvertures radiales 14 (figure 3) dont le nombre et la largeur sont déterminés de façon à permettre le passage vers l'aval d'un débit limité de matière. Il en résulte dans la zone C un freinage de l'avancement de la matière et par conséquent une compression dans la zone B.

La zone de freinage C est normalement suivie d'une nouvelle zone de transport D dans laquelle la matière reste comprimée jusqu'à la sortie du fourreau qui peut être constituée soit par une filière unique soit, de préférence, par deux filières 15 placées chacune dans l'axe d'une vis.

Le long du fourreau sont placés des moyens de chauffage 16 qui s'étendent sur la zone de freinage C et au moins sur la partie aval de la zone de compression B.

La farine de céréale sortant du concasseur est introduite par l'orifice 18 à l'extrémité amont de l'extrudeuse avec une certaine quantité d'eau qui peut être assez réduite, par exemple 5 % en poids, la quantité d'eau nécessaire pouvant être apportée par l'eau de constitution du grain. On sait que, dans les extrudeuses à plusieurs vis, la matière peut être entraînée même lorsque les filets ne sont pas remplis. De ce fait, la farine est mélangée avec l'eau dans la zone de transport A et forme ainsi une pâte qui se comprime peu à peu dans la zone B à pas resserré. Les filets se remplissent progressivement et entraînent en rotation, sur leur périphérie, la pâte qui passe d'une vis à l'autre dans la zone 17, dans laquelle l'engrènement des filets diminue la section de passage et détermine une augmentation de pression et un effet de cisaillement accru. La température augmente sous l'effet du frottement et, éventuellement, du chauffage du fourreau par les moyens 16. Ainsi, même en présence d'une quantité réduite d'eau, la matière forme à la fin de la zone resserrée B, une pâte visqueuse qui passe dans la zone de freinage C munie à cet effet de filets à pas inversés dans lesquelles on a ménagé des fenêtres 14 qui s'étendent entre l'arbre de rotation et la périphérie du filet. Ces fenêtres sont placées en nombre égal sur les vis et celles-ci sont calées de telle sorte que, périodiquement, deux fenêtres arrivent en coïncidence dans la zone d'engrènement 17. Ainsi une partie de la pâte comprimée à l'intérieur du filet peut passer dans le filet suivant par l'orifice axial ainsi constitué et qui s'ouvre périodiquement. A l'intérieur de la zone C, la pâte est ainsi soumise à un malaxage intense par effet combiné de compression et de cisaillement. En outre, sous l'effet du frottement et des moyens de chauffage 16 qui permettent d'assurer une régulation de température, celle-ci peut être maintenue entre 130 et 150 °C jusqu'à la sortie de la zone de freinage C. Il en résulte une transformation physique de l'amidon qui permet d'obtenir l'éclatement des grains de celui-ci, l'homogénéité de la pâte étant assurée par le passage dans la zone de sortie D et par l'extrusion dans les filières 15 qui provoquent un effet de laminage supplémentaire.

On obtient ainsi à la sortie 15 de l'extrudeuse 8 un produit prégélifié que l'on introduit dans un dispositif d'empâtage qui peut être l'hydrateur 4 utilisé également pour l'empâtage de la farine de malt. Ce produit peut être relativement sec car la quantité d'eau introduite dans l'extrudeuse peut être réduite à celle juste nécessaire à l'éclatement des grains. L'expérience a montré qu'il suffit d'ajouter un peu d'eau au démarrage de l'extrudeuse, par exemple 5 %, l'eau de constitution de la céréale pouvant être suffisante pour la poursuite de la cuisson-extrusion.

Après empâtage, le grain cru extrudé est mélangé en proportion voulue dans la cuve-matière 5 avec le malt empâté pour y subir le traitement de saccharification avec montée en température progressive jusqu'à transformation totale de l'amidon et obtention, avec un bon rendement, d'un moût sucré permettant la préparation, par fermentation, d'une boisson alcoolisée.

Ainsi, la cuisson-extrusion du grain cru avant empâtage rend possible la transformation ultérieure de son amidon par les enzymes du malt, dans un processus d'infusion, alors que, jusqu'à présent, le grain cru devait être soumis au processus de décoction, plus compliqué à mettre en œuvre.

D'autre part, selon une disposition particulièrement avantageuse un hydrateur unique 4 peut être placé directement à la sortie du concasseur 3 et de l'extrudeuse 8 pour être alimenté par des proportions déterminées de farine de malt, de grain cru extrudé et d'eau ajoutée en quantité nécessaire. On obtient ainsi une pâte ayant la teneur en malt et la viscosité voulue, qui est envoyée dans la cuve-matière 5 où se réalise le traitement de saccharification.

Cette division du traitement en deux étapes, l'une de préparation d'un produit relativement sec prégélifié et l'autre de saccharification dans laquelle on ajoute la quantité d'eau nécessaire, permet la préparation à l'avance et le stockage de la céréale extrudée en un endroit éventuellement éloigné de la brasserie où l'on réalise seulement la fin de la préparation.

On a constaté que, à partir d'une céréale de substitution traitée, selon l'invention, par cuisson extrusion, il est possible d'obtenir la saccharification du moût obtenu puis sa fermentation ultérieure en utilisant une teneur en malt qui peut descendre jusqu'à environ 40 % en poids de matière sèche. Ainsi, en utilisant des brisures de riz, on a réalisé un moût avec un rendement d'utilisation du grain cru de 93 %. On a également traité de l'orge non malté en grains entiers et obtenu un moût ayant un extrait sec supérieur à celui que l'on aurait obtenu par un traitement classique.

En outre, le traitement de saccharification peut être effectué en une heure au maximum, c'est-à-dire beaucoup plus rapidement que dans les procédés classiques de brassage d'une céréale de substitution, compte-tenu de la faible proportion de malt nécessaire.

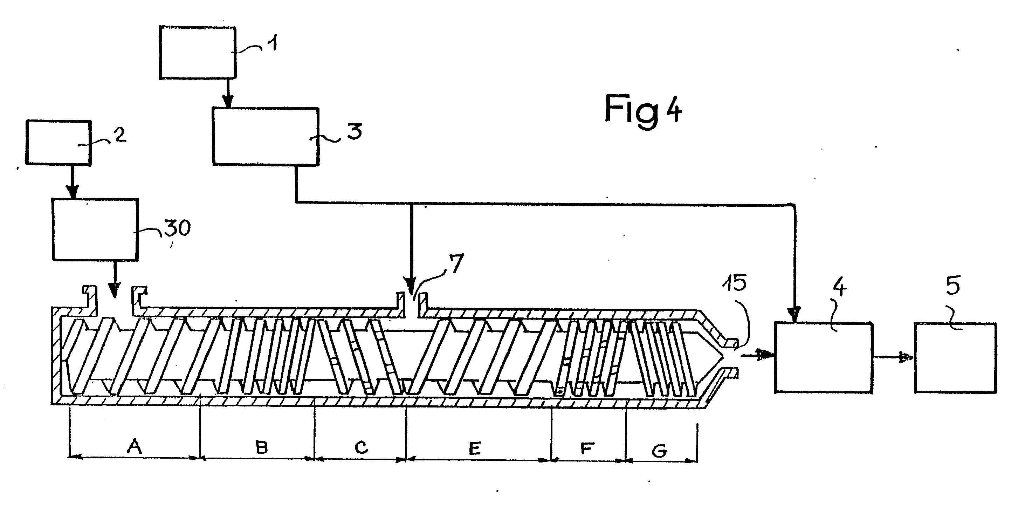

Dans une variante, représenté sur la figure 4, on introduit au moins une partie du malt ou autre produit hydrolysant, directement dans l'extrudeuse 8, par un orifice 7 débouchant dans une section de détente E, à pas élargi. Celle-ci est suivie d'une nouvelle section de compression F précédant une seconde section de freinage G à pas inversé. On produit donc un mélange intime des enzymes ainsi apportés, avec la céréale et un début de saccharification. Ce mélange relativement fluide est évacué directement par la filière 15 vers le dispositif d'empâtage 4 où on lui ajoute le reste du malt nécessaire à la saccharification dans la cuve-matière 5.

Comme on l'a représenté sur la figure 4, le malt introduit par l'orifice 7 est, de préférence de la farine sèche venant du concasseur, ce qui favorise le mélange dans la seconde partie de l'extrudeuse.

Le procédé selon l'invention permet donc, dans la mesure ou la législation l'autorise, d'augmenter la proportion de malt remplacée par une céréale de substitution, sans changer ou en améliorant le rendement de brassage, ce qui constitue une économie importante. En outre, l'installation est simplifiée et son fonctionnement facilité puisque le traitement de la céréale s'effectue en continu dans l'extrudeuse et que l'on peut régler éventuellement à l'intérieur d'un même hydrateur les proportions respectives de malt et de céréale cuite. L'hydrateur 4 peut d'ailleurs être constitué par la cuve-matière 5 dans laquelle on réalise tout d'abord l'empâtage, puis la saccharification.

Par ailleurs, le procédé a été décrit essentiellement dans le cas de la préparation d'une bière à base de malt car il permet d'en diminuer la proportion sans modifier la qualité du produit, mais l'utilisation de céréale extrudée peut également être intéressante dans les cas où le malt est remplacé par des enzymes industrielles. En effet, il est avantageux de remplacer la chaudière à trempe utilisée dans le procédé par décoction par une machine d'extrusion moins encombrante et d'utilisation plus simple.

C'est ainsi, par exemple, que, dans une certaine mesure, le passage de la céréale dans les zones de transport et de compression A et B peut réaliser un concassage des grains. Le concassage pourrait alors être moins poussé dans le concasseur et achevé dans l'extrudeuse. On réaliserait ainsi une économie de matériel. Cependant, même dans le cas où l'on utilise une farine de céréale, il peut être intéressant d'introduire dans l'extrudeuse avec cette farine une certaine proportion de céréale entière. En effet, lorsque l'on remplace le malt par une autre céréale et en particulier des brisures de riz, il peut manquer, au cours de la filtration ultérieure, une certaine quantité de cellulose dans la drèche. En introduisant avec la farine de céréale une certaine quantité de grains entiers, on pourrait donc compléter la proportion de cellulose de la drèche.

## Revendications

1. Procédé de préparation d'un moût sucré à partir d'au moins une céréale, dans lequel la céréale est d'abord empâtée avec de l'eau puis mélangée à un produit hydrolysant apportant des enzymes naturelles contenues dans du malt ou des enzymes industrielles pour subir un traitement de saccharification, caractérisé par le fait qu'avant empâtage, la céréale est soumise à un traitement de cuisson-extrusion effectué à une température supérieure à 100 °C, par passage en continu de la céréale, avec une quantité d'eau pouvant être réduite à celle nécessaire à l'éclatement du grain d'amidon, dans une machine d'extrusion à vis (8) muni de moyens (16) de chauffage de la matière et que la céréale extrudée est ensuite empâtée et soumise à un traitement de saccharification effectué par chauffage progressif en présence du produit hydrolysant correspondant à une quantité d'enzymes naturelles ou industrielles équivalente à celle contenue dans 40 % de malt, jusqu'à l'obtention du moût sucré.

2. Procédé de préparation de moût selon la revendication 1, caractérisé par le fait que la machine d'extrusion (8) comprend, à l'intérieur d'un fourreau (11) au moins deux vis (9, 10) munies de filets à pas variés déterminant, dans le sens d'avancement de la matière traitée, au moins deux zones successives, respectivement (A, B) de transport et (C) de freinage, la céréale introduite à l'extrémité amont de la machine avec une quantité réglée d'eau, subissant dans la zone de transport (A, B) un malaxage avec compression progressive jusqu'à obtention d'une pâte visqueuse susceptible d'être entraînée dans la zone de freinage (C) où elle subit une élévation de température à au moins 100 °C et un malaxage intense produisant l'éclatement des grains d'amidon par effets combinés de compression et de cisaillement.

3. Procédé de préparation d'un moût selon la revendication 1, caractérisé par le fait qu'après la cuisson-extrusion, on réalise en même temps l'empâtage de la céréale et du produit hydrolysant, dans un même dispositif d'empâtage (4) alimenté simultanément, en proportions déterminées, par le produit hydrolysant et par la céréale préalablement extrudé, la pâte préparée subissant ensuite le traitement de saccharification.

4. Procédé de préparation de moût selon l'une des revendications précédentes, caractérisé par le fait qu'au moins une partie de concassage de la céréale est réalisée dans la machine d'extrusion (8) au cours de l'entraînement des grains dans les vis.

5. Installation de préparation de moût sucré à partir d'au moins une céréale et d'un produit hydrolysant par rapport d'enzymes naturelles contenues dans du malt ou d'enzymes industrielles, comprenant au moins un dispositif (4) d'empâtage avec de l'eau de la céréale et du produit hydrolysant et un dispositif (5) de saccharification de la céréale avec le produit hydrolysant, caractérisée par le fait qu'elle comprend un dispositif (8) de cuisson-extrusion de la céréale, placé en amont du dispositif d'empâtage (4) et constitué d'une machine d'extrusion à vis (8) munie de moyens (16) de chauffage, dans laquelle la céréale subit une cuisson-extrusion sous pression à une température supérieure à 100 °C, la céréale extrudée étant ensuite empâtée et mélangée en proportion voulue avec le produit hydrolysant dans le dispositif de saccharification (5).

6. Installation de préparation de moût sucré selon la revendication 5, caractérisé par le fait que le dispositif d'empâtage (4) est alimenté simultanément en produit hydrolysant et en céréale extrudée pour la réalisation d'une pâte mélangée susceptible d'être traitée dans le dispositif de saccharification (5).

7. Installation de préparation de moût selon la revendication 5, caractérisée par le fait que la machine d'extrusion (8) comprend au moins deux vis (9, 10) munies de filetages (12) à pas variés déterminant, dans le sens d'avancement de la matière, une zone de transport (A), une zone (B) de compression progressive de la céréale et une zone (C) de freinage avec compression et malaxage intense dans laquelle se réalise l'éclatement des grains d'amidon de la céréale, le fourreau (11) étant muni de moyens (16) de chauffage s'étendant sur la zone (C) de freinage et sur au moins la partie aval (8) de la zone de transport.

8. Installation de préparation de moût selon la revendication 7, caractérisée par le fait que, dans la zone de freinage (C), les vis (9, 10) sont munies de filets (13) à pas inversés dans lesquels sont ménagées des ouvertures (14) de largeur déterminée pour le passage vers l'aval d'un débit contrôlé de matière.

## Claims

1. Process for preparing a sweet wort from at least one cereal, in which the cereal is first put into the form of a paste with water then mixed with a hydrolyzing product introducing natural enzymes contained in malt or industrial enzymes so as to undergo a saccharification treatment, characterised in that the cereal is subjected, before put into the form of a paste, to a cooking-extrusion treatment carried out at a temperature above 100 °C, by the continuous passage of the cereal, with an amount of water which may be reduced to that required for the bursting of the starch grain, in a screw extrusion machine (8) provided with means (16) for heating the material, and the extruded cereal is then put into the form of a paste and subjected to a saccharification treatment carried out by a progressive heating in the presence of the hydrolyzing product corresponding to a quantity of natural or industrial enzymes equivalent to that contained in 40 % of malt until the sweet wort is obtained.

2. Process for preparing a wort according to claim 1, characterised in that the extrusion machine (8) comprises, within a sleeve (11), at least two screws (9, 10) provided with varying pitches which determine, in the direction of the advance of the treated material, at least two successive zones, respectively a transport zone (A, B) and a retarding zone (C), the cereal introduced at the upstream end of the machine with a regulated amount of water, undergoing in the transport zone (A, B) a malaxation with progressive compression until the obtainment of a viscous paste capable of being driven in the retarding zone (C) where it undergoes a rise in temperature to at least 100 °C and an intense malaxation producing the bursting of the starch grains by the combined effects of compression and shearing.

3. Process for preparing a wort according to claim 1, characterised in that, after the cooking-extrusion, there is carried out at the same time the putting of the cereal and the hydrolyzing product into the form of a paste in the same paste-forming device (4) fed simultaneously, in given proportions, with the hydrolyzing product and the previously-extruded cereal, the prepared paste thereafter undergoing the saccharification treatment.

4. Process for preparing a wort according to one of the preceding claims, characterised in that at least a part of the crushing of the cereal is achieved in the extrusion machine (8) in the course of the driving of the grains in the screws.

5. Installation for preparing a sweet wort from at least one cereal and a hydrolyzing product by introduction of natural enzymes contained in the malt or industrial enzymes, comprising at least one device (4) for forming a paste with water, the cereal and the hydrolyzing product, and a device (5) for the saccharification of the cereal with the hydrolyzing product, characterised in that it comprises a cereal cooking-extrusion device (8), located on the upstream side of the paste-forming device (4) and constituted by a screw extrusion machine (8) provided with heating means (16), in which the cereal undergoes a cooking-extrusion under pressure at a temperature higher than 100 °C, the extruded cereal being thereafter put into the form of a paste and mixed, in the desired proportion, with the hydrolyzing product in the saccharification device (5).

6. Installation for preparing a sweet wort according to claim 5, characterised in that the paste-forming device (4) is simultaneously fed with hydrolyzing product and extruded cereal so as to form a mixed paste capable of being treated in the saccharification device (5).

7. Installation for preparing a wort according to claim 5, characterised in that the extrusion machine (8) comprises at least two screws (9, 10) provided with screwthreads (12) having varying pitches determining, in the direction of advance of the material, a transport zone (A), a zone (B) for the progressive compression of the cereal, and a retarding zone (C) with compression and intense malaxation in which the starch grains of the cereal are burst, the sleeve (11) being provided with heating means (16) extending through the retarding zone (C) and through at least the downstream part (8) of the transport zone.

8. Installation for preparing a wort according to claim 7, characterised in that, in the retarding zone (C), the screws (9, 10) are provided with threads (13) having reversed hands in which are formed openings (14) of given width for the downstream passage of a controlled flow of material.

**Patentansprüche**

1. Verfahren zur Herstellung einer Zuckermaische ausgehend von mindestens einem Getreide, bei dem das Getreide zunächst mit Wasser angeteigt und dann zur Durchführung einer Verzuckerungsbehandlung mit einem hydrolysierenden Produkt, welches im Malz enthaltene natürliche Enzyme oder industrielle Enzyme zuführt, vermischt wird, dadurch gekennzeichnet, daß man das Getreide vor dem Anteigen einer Koch-Extrusionsbehandlung bei einer Temperatur oberhalb von 100 °C unterwirft, indem man das Getreide zusammen mit einer Wassermenge, die auf die zum Aufbrechen der Stärkekörner erforderliche Menge beschränkt werden kann, kontinuierlich in eine mit Einrichtungen (16) zum Erhitzen des Materials versehene Schneckenstrangpresse (8) einführt und das extrudierte Getreide anschließend anteigt und durch progressives Erhitzen in Gegenwart des hydrolysierenden Produkts, welches einer Menge der natürlichen oder industriellen Enzyme entspricht, die in 40 %-igem Malz enthalten ist, der Verzuckerungsbehandlung bis zum Erhalt der Zuckermaische unterwirft.

2. Verfahren zur Herstellung der Maische nach Anspruch 1, dadurch gekennzeichnet, daß die Strangpresse (8) im Inneren eines Mantels (11) mindestens zwei Schnecken (9, 10) umfaßt, die mit Gewindegängen unterschiedlicher Steigung ausgerüstet sind und in der Förderrichtung des behandelten Materials mindestens zwei aufeinanderfolgende Transportzonen (A, B) und eine Verzögerungszone (C) bilden, wobei das am Einführungsende der Vorrichtung mit einer gesteuerten Wassermenge eingeführte Getreide in der Förderzone (A, B) eine Durchmischung mit progressiver Verdichtung bis zur Ausbildung einer viskosen Paste unterliegt, die in die Verzögerungszone (C) gefördert werden kann, wo sie einer Temperaturerhöhung auf mindestens 100 °C und einer intensiven Durchmischung unterliegt, bis zum Aufbrechen der Stärkekörner durch die kombinierte Wirkung von Druck- und Scherkräften.

3. Verfahren zur Herstellung der Maische nach Anspruch 1, dadurch gekennzeichnet, daß man nach dem Koch-Extrusions-Vorgang gleichzeitig das Anteigen des Getreides mit dem hydrolysierenden Produkt in ein und derselben Anteigvorrichtung (4) bewirkt, die gleichzeitig mit vorbestimmten Mengen des hydrolysierenden Produkts und des zuvor extrudierten Getreides versorgt wird, wonach der gebildete Brei anschließend der Verzuckerungsbehandlung unterworfen wird.

4. Verfahren zur Herstellung der Maische nach einem der vorhergehenden Ansprüche, dadurch gekennzeichnet, daß die Zerkleinerung des Getreides mindestens zum Teil durch das Mitnehmen der Körner in den Schnecken der Strangpresse (8) bewirkt wird.

5. Einrichtung zur Herstellung von Zuckermaische ausgehend von mindestens einem Getreide und einem hydrolysierenden Produkt durch Zufuhr von im Malz enthaltenen natürlichen Enzymen oder industriellen Enzymen, mit mindestens einer Einrichtung (4) zum Anteigen des Getreides mit Wasser und dem hydrolysierenden Produkt und einer Einrichtung (5) zur Verzuckerung des Getreides mit dem hydrolysierenden Produkt, dadurch gekennzeichnet, daß sie eine in Förderrichtung oberhalb der Anteigeinrichtung (4) angeordnete Einrichtung (8) zur Koch-Extrusion des Getreides in Form einer Schneckenstrangpresse (8) umfaßt, die mit einer Heizeinrichtung (16) versehen ist, in welcher das Getreide unter Druck bei einer Temperatur oberhalb 100 °C einer Koch-Extrusions-Behandlung unterliegt, wonach das extrudierte Getreide in der Verzuckerungseinrichtung (5) mit der gewünschten Menge des hydrolysierenden Produkts angeteigt wird.

6. Einrichtung zur Herstellung der Maische nach Anspruch 5, dadurch gekennzeichnet daß die Anteigeinrichtung (4) gleichzeitig mit dem hydrolysierenden Produkt und dem extrudierten Getreide zur Bildung eines gemischten Breis versorgt wird, der in der Verzuckerungseinrichtung (5) behandelt werden kann.

7. Einrichtung zur Herstellung der Maische nach Anspruch 5, dadurch gekennzeichnet, daß die Strangpresse (8) mindestens zwei Schnecken (9, 10) umfaßt, die mit Schneckengängen (12) variierender Steigung versehen sind, die in der Förderrichtung des Materials eine Transportzone (A), eine Zone (B) zur progressiven Verdichtung des Getreides und eine Verzögerungszone (C) zur intensiven Verdichtung und Durchmischung, in der das Aufbrechen der Stärkekörner des Getreides erfolgt, umfaßt, wobei der Mantel (11) mit einer Heizeinrichtung (16) versehen ist, die sich über die Verzögerungszone (C) und mindestens den stromabwärts gelegenen Bereich (8) der Förderzone erstreckt.

8. Einrichtung zur Herstellung der Maische nach Anspruch 7, dadurch gekennzeichnet, daß die Schnecken (9, 10), in der Verzögerungszone (C) mit Schneckengängen (13) umgekehrter Förderrichtung versehen sind, die Öffnungen (14) aufweisen, die eine gesteuerten Durchlaß des Materials in stromabwärts gelegener Richtung ermöglichen.

Fig 1

Fig 2

Fig 3

Fig 4

0 133 132